Europäisches Patentamt

European Patent Office

Office européen des brevets

(11) Veröffentlichungsnummer: **0 275 883 B1**

(19)

## EUROPÄISCHE PATENTSCHRIFT

(45) Veröffentlichungstag der Patentschrift: **19.08.92**

(51) Int. Cl.⁵: **H01M 4/66**, H01M 2/02

(21) Anmeldenummer: **88100186.1**

(22) Anmeldetag: **08.01.88**

(54) Verwendung einer Kathodenbeschichtungsdispersion für Batterien.

(30) Priorität: **15.01.87 CH 125/87**

(43) Veröffentlichungstag der Anmeldung:
**27.07.88 Patentblatt 88/30**

(45) Bekanntmachung des Hinweises auf die
Patenterteilung:
**19.08.92 Patentblatt 92/34**

(84) Benannte Vertragsstaaten:
**AT BE CH DE ES FR GB IT LI SE**

(56) Entgegenhaltungen:
EP-A- 0 064 816        EP-A- 0 175 149
DE-A- 1 936 265        DE-A- 2 354 023
DE-A- 2 645 729        GB-A- 2 181 884
LU-A- 60 739           US-A- 2 594 047
US-A- 4 125 685

PATENT ABSTRACTS OF JAPAN, Band 10,
Nr. 213 (E-422)[2269], 25. Juli 1986; & JP-A-61
51 765 (JAPAN STORAGE BATTERY CO.,
LTD) 14-03-1986

PATENT ABSTRACTS OF JAPAN, Band 5, Nr.
95 (E-62)[767], 20. Juni 1981; & JP-A-56 38 770
(TOSHIBA RAY-O-VAC K.K.) 14-04-1981

PATENT ABSTRACTS OF JAPAN, Band 9, Nr.

140 (E-321)[1863], 14. Juni 1985; & JP-A-60 23
967 (SEIKO DENSHI KOGYO K.K.) 06-02-1985

PATENT ABSTRACTS OF JAPAN, Band 6, Nr.
25 (E-94)[903], 13. Februar 1982, Seite 97 E
94; & JP-A-56 145 670 (MATSUSHITA DENKI
SANGYO K.K.) 12-11-1981

PATENT ABSTRACTS OF JAPAN, Band 9, Nr.
240 (E-345)[1963], 26. September 1985; & JP-
A-60 91 564 (TOSHIBA K.K.) 22-05-1985

(73) Patentinhaber: **LONZA AG**

**Gampel/Wallis(CH)**

(72) Erfinder: **Periard, Jacques, Dr.**
**Küfermattstrasse 5**
**Sins Kanton Aargau(CH)**
Erfinder: **Wissler, Mathis**
**Küfermattstrasse 17**
**Sins Kanton Aargau(CH)**

(74) Vertreter: **von Füner, Alexander, Dr. et al**
**Patentanwälte v. Füner, Ebbinghaus, Finck**
**Mariahilfplatz 2 & 3**
**W-8000 München 90(DE)**

**Beschreibung**

Die Erfindung betrifft die Verwendung einer graphithaltigen Kathodenbeschichtungsdispersion für Batterien mit verbesserten Lagerungs- und Entladungseigenschaften, die auf dem Kathodenhalter angebracht ist und einen elektrisch leitenden Schutzfilm bildet.

Aus der JP-PS 56-145503 sind alkalische Trockenzellen bekannt, die verbesserte Selbstentladungseigenschaften aufweisen. Die Verbesserung wird durch einen elektrisch leitenden Schutzfilm aus Polyvinylisobutylether und einem kohlenstoffhaltigen Material, aufgebracht auf der Innenseite des Kathodengefässes, erreicht. Die Materialien werden mit Hilfe eines organischen Lösungsmittels z.B. Xylol aufgetragen und nach Verdampfen des Lösungsmittels bleibt der elektrisch leitende Film mit gummiartiger Elastizität zurück.

Die JP-PS 59-224054 (CA 102: 175 011f.) beschreibt ebenfalls eine elektrisch leitende Zusammensetzung auf der inneren Oberfläche eines Batteriebehälters aus Graphit und Polyvinylpyrrolidinon. Als Lösungsmittel für das Polyvinylpyrrolidinon und als Träger zur Dispergierung des Graphits wird Ethanol vorgeschlagen.

Nachteil dieser Beschichtungen ist die Notwendigkeit der Anwendung eines organischen Lösungsmittels als Träger der Bestandteile. Im Fabrikationsprozess, bei der Batterieherstellung, sind aber Lösungsmitteldämpfe unerwünscht und können zu erheblichen Betriebsstörungen durch Abluftfilterbeschädigung führen oder bedürfen eines speziellen Explosionsschutzes.

Die Anwendung von Leitlacken bekannter Art führte auch nicht zum Ziel, da die entsprechenden Filme nicht wasserbeständig sind.

Die Anwendung von Latices hat weitere Nachteile, da diese bei den herrschenden oxidativen Bedingungen und in alkalischem Medium nicht beständig sind.

Aufgabe vorliegender Erfindung ist es, eine Dispersion zur Beschichtung von Kathodenträgern zu verwenden, die keiner organischen Lösungsmittel bedarf und zu Schutzfilmen führt, die wasserbeständig sind und die oxidativen Angriffen und alkalischen Medien widerstehen.

Erfindungsgemäss wird das durch die Verwendung einer graphit- und/oder russhaltigen Kathodenbeschichtungsdispersion gemäss Patentanspruch 1 erreicht, die als homogene wässrige Dispersion aufgetragen wird und einen Binder aus der Reihe der Copolymere aus Vinylacetat und Ethylen, aus Vinylacetat und Vinylchlorid, aus Styrol und Butadien, oder aus Vinylacetat, Vinylchlorid und Ethylen enthält.

Zweckmässig ist das Copolymer von Styrol und Butadien durch Einbau von ungesättigten Carbonsäuren, vorzugsweise Acrylsäure, carboxyliert und damit vernetzbar.

Es werden insbesondere solche Styrol-Butadien-Copolymere verwendet, die einen Styrolanteil von grösser als 50%, besonders bevorzugt zwischen 70 und 80%, aufweisen.

Sinngemäss lassen sich auch Gemische der genannten Binder unter sich anwenden.

Die erfindungsgemäß Verwendeten Dispersionen verhalten sich zweckmässig pseudoplastisch und thixotrop.

Wesentlicher Bestandteil der Dispersionen ist das Wasser, das als Träger der Feststoffanteile fungiert. Der Wasseranteil an der gebrauchsfertigen Dispersion beträgt zweckmässig 40 bis 95 Gew.%, vorzugsweise 50 bis 80 Gew.%.

Als elektrisch leitfähiges Material wird Graphit oder Russ, wie Acetylenruss, oder Mischungen der Materialien eingesetzt.

Geeignete Graphite sind natürlicher oder synthetischer Graphit hoher Reinheit und hoher Kristallinität. Der Aschegehalt soll unter 0,1% liegen. Besonders geeignet sind Graphite, die zudem eine Korngrösse von weniger als 6 $\mu$m und eine BET-Oberfläche von 12 $m^2$/g und mehr aufweisen.

Das elektrisch leitfähige Material wird in Mengen von 40 bis 85 Gew.%, bezogen auf die Trockenmasse der Dispersion (leitfähiges Material, Tenside, Additive und Polymer), angewendet. Vorzugsweise beträgt der Anteil 55 bis 75 Gew.%. Wesentlich ist auch das Verhältnis leitfähiges Material zu Binder, da auf eine hohe Leitfähigkeit abgezielt wird und diese von einem hohen Anteil an leitfähigem Material abhängig ist.

Für die erfindungsgemäß Verwendeten Kathodenbeschichtungsdispersionen liegt das Verhältnis leitfähiges Material zu Binder zweckmässig zwischen 4:1 und 1:2, vorzugsweise zwischen 3:1 und 1:1.

Die Dispersion enthält von Vorteil zusätzlich ein Tensid bzw. eine Mischung verschiedener Tenside.

Als Tenside werden zweckmässig handelsübliche Vertreter aus der Reihe der nichtionogenen Tenside oder der Fluortenside angewendet. Diese Tenside haben die Aufgabe, den Graphit und/oder Russ benetzbar zu machen, die Herstellung einer homogenen Dispersion zu ermöglichen und Lufteinschlüsse in der Dispersion und schliesslich im Schutzfilm zu vermeiden.

Es kann unter Umständen von Vorteil sein, Gemische von zwei oder mehreren Tensiden einzusetzen, um die erwähnten Aufgaben in optimaler Weise zu erfüllen.

Die Menge des anzuwendenden Tensides oder der Tenside beträgt zweckmässig 0,5 bis 5 Gew.%,

bezogen auf die Trockenmasse der Dispersion. Grössere Mengen an Tensiden sind nicht empfehlenswert, da sonst die Haftung des Schutzfilmes auf der zu behandelnden Oberfläche vermindert wird.

Es kann weiters notwendig sein, weitere Additive, wie Antischaummittel, zuzugeben.

Die erfindungsgemässe Dispersion wird derart hergestellt, dass man die leitfähige Komponente zusammen mit dem Tensid, bzw. den Tensiden und gegebenenfalls weiteren Additiven mit Wasser zu einer Vordispersion mischt. Vorteilhaft wird dabei so vorgegangen, dass zuerst das Tensid, bzw. das Tensidgemisch mit eventuell weiteren Additiven im Wasser vorgelegt wird und darauf das leitfähige Material zugesetzt wird. Zu dieser Vordispersion kann darauf der Binder, üblicherweise vorbereitet als ca. 50%ige wässrige Dispersion, zugegeben und zur anwendungsbereiten homogenen Dispersion durch intensives Mischen weiterverarbeitet werden.

Die erfindungsgemäß Verwendeten Kathodenbeschichtungsdispersion weisen von Vorteil eine Pseudoplastizität und ein thixotropes Verhalten auf. Deren Viskosität liegt zweckmässig in einem Bereich von 0,05 bis 1,2 Pa.s (20°C), vorteilhaft von 0,06 bis 1 Pa.s (20°C).

Die Auftragung der Dispersion kann auf an sich bekannte Weise, beispielsweise durch Tauchen, Giessen, Streichen oder Sprühen, erfolgen.

Das Wasser kann durch Trocknenlassen, gegebenenfalls unterstützt durch Erwärmung oder durch Anlegen von Vakuum, entfernt werden.

Die aufzutragende Menge wird vorteilhaft derart gewählt, dass die Schichtdicke des Schutzfilmes nach dem Verflüchtigen des Wassers zweckmässig 5 bis 200 $\mu$m und vorzugsweise 20 bis 100 $\mu$m beträgt. Dabei bildet sich ein Film aus, der sowohl in sich als auch in der Schichtdicke gleichmässig ist.

Die Kathodenbeschichtungsdispersion nach der Verwendung der vorliegenden Erfindung eignet sich zur Behandlung von Kathodenoberflächen an Primär- und Sekundärbatterien. Ein bevorzugtes Anwendungsgebiet ist die Behandlung der inneren Oberfläche von Batterienbechern. Insbesondere Alkalitrockenzellen werden derart hergestellt, dass ein Stahlbecher vorgeformt und zumindest auf dessen Innenseite vernickelt wird. In diesen Becher werden gepresste Ringe aus dem Kathodenmaterial, enthaltend eine an sich bekannte Mischung aus Mangandioxid, Graphit und Kaliumhydroxid, fest anliegend an die innere Becheroberfläche eingeführt. Um den elektrischen Kontakt zwischen dem Becher und den Ringen aus dem Kathodenmaterial zu verbessern und insbesondere um eine Korrosion sowohl der Nickelschicht als auch des Bechers selbst zu vermeiden, wird der Becher auf der Innenseite mit der erfindungsgemässen Dispersion behandelt. Durch Ausnützen der thixotropen und pseudoplastischen Eigenschaften der Dispersion wird eine gleichmässige Schichtdicke erreicht. Nach der Entfernung des Wassers bleibt ein mechanisch und chemisch beständiger, elektrolytunlöslicher Schutzfilm zurück. Durch den hohen Gehalt an reinem und hochkristallinem Graphit, vorerwähnter Art, ist zudem eine optimale Leitfähigkeit gewährleistet.

Beispiele 1

|  |  |
|---|---|
| 19,6 g | Graphit (99,6% C, kleiner 6 $\mu$m) KS 6 LONZA, |
| 0,7 g | Tensid (Alkylacrylpolyglykolether) und |
| 0,05 g | Netzmittel (fluorierte Alkylcarboxylate) wurden mit |
| 64,5 g | Wasser zu einer Vordispersion gemischt und schliesslich mit |
| 19,9 g | eines Binders in Form einer 50%igen wässrigen Vinylacetat-Vinylchlorid-Ethylen-Copolymer-Dispersion |

zur anwendungsbereiten Dispersion verarbeitet.

Die Dispersion wurde von Hand in einer Schichtdicke von ca. 60 $\mu$m auf nickelplatierte Bleche aufgetragen. Nach einer Trocknungszeit von 5 h bei Raumtemperatur und 0,5 h bei 110°C wurde die Ritzhärte nach ISO 1518 zur Beurteilung der Haftung bestimmt. Es wurde ein Wert von ca. 2 N gefunden, was einer mittleren Haftung entspricht.

In einem weiteren Test wurden innen vernickelte Stahlbecher mit der Dispersion beschichtet und während 5 h bei Raumtemperatur und 0,5 h bei 110°C getrocknet. Anschliessend wurden Kathodenringe, bestehend aus Mangan-IV-oxid/Graphit und Kaliumhydroxid-Lösung eingeführt. Die Proben wurden in verschlossenen Gefässen während vier Wochen gelagert. Zum Vergleich wurden innen vernickelte Stahlbleche ohne Schutzdispersion auf die gleiche Weise behandelt.

Nach vier Wochen Lagerung konnte anhand der Verfärbung der Nickelschicht eindeutig festgestellt werden, dass die unbeschichteten Becher korrodierten, die beschichteten hingegen nicht.

Beispiel 2

|  |  |
|---|---|
| 280 g | Graphit KS 6 LONZA, |

| 7 g | Tensid (aromatischer Polyglykolether), |
|---|---|
| 0,5 g | Antischäumer (Fettsäureester, Kohlenwasserstoffgemisch) wurden mit |
| 397,4 g | Wasser zu einer Vordispersion gemischt und dann mit |
| 240 g | eines Binders in Form einer 50%igen wässrigen Vinylchlorid-Ethylen-Vinylacetat-Copolymer-Dispersion |

zur anwendungsbereiten Dispersion verarbeitet.

Die Viskosität der Dispersion betrug 0,075 Pa.s, die Haftung einer 60 µm-Schicht auf einem vernickelten Blech 10 N (nach ISO 1518).

Weiters wurde die Veränderung des Uebergangwiderstandes Kathode/vernickelter Becher oder vernickeltes Blech bei Lagerung bei erhöhter Temperatur bestimmt.

Die folgende Tabelle zeigt den Widerstandsanstieg der Grenzschicht Kathode (Mangan-IV-oxid/Graphit/Kaliumhydroxid)/vernickelter Stahlbecher bei der Lagerung bei 60°C, in einem Fall mit einer Kontaktschicht gemäss diesem Beispiel von 60 µm versehen und im anderen Fall ohne Kontaktschicht:

**Widerstand (Ohm)**

|  | Tag 0 | Tag 5 | Tag 10 |  |
|---|---|---|---|---|
| mit Kontaktschicht | 0,01 | 0,05 | 0,1 | (Erfindung) |
| ohne Kontaktschicht | 0,05 | 0,3 | 2,4 | (Vergleich) |

Nach dem Zerlegen der Probekörper zeigte die Kontaktdispersion die gleich gute Haftung wie unmittelbar nach der Beschichtung und Mischung der Proben.

Beispiel 3

Im gleichen Verfahren wie in Beispiel 1 beschrieben, wurden

| 180 g | Graphit KS 6 LONZA |
|---|---|
| 20 g | Acetylen Russ |
| 5 g | Tensid |
| 3 g | Antischäumer |
| 675 g | Wasser |
| 240 g | einer wässrigen 50%igen carboxylierten Styrol-Butadien-Copolymer-Dispersion (ca. 70% Styrol) |

zu einer Dispersion verarbeitet.

Die Viskosität der Dispersion betrug 0,96 Pa.s, die Haftung einer 60 µm-Schicht auf einem vernickelten Blech 6 N (nach ISO 1518).

Die Untersuchung des Uebergangswiderstandes, wie in Beispiel 2 beschrieben, ergab folgende Werte:

**Widerstand (Ohm)**

|  | Tag 0 | Tag 5 | Tag 10 |  |
|---|---|---|---|---|
| mit Kontaktschicht | 0,01 | 0,15 | 0,3 | (Erfindung) |
| ohne Kontaktschicht | 0,05 | 0,3 | 2,4 | (Vergleich) |

Patentansprüche

1. Verwendung einer graphit- und/oder rußhaltigen Katodenbeschichtungsdispersion in Form einer homogenen wäßrigen Dispersion zur Behandlung von Kathodenoberflächen, enthaltend einen synthetischen Graphit mit einem Aschegehalt von kleiner als 0,1%, einer Korngröße von weniger als 6µm und einer BET-Oberfläche von 12 m²/g und mehr und einen Binder aus der Reihe der Copolymere von Vinylacetat und Ethylen, von Vinylacetat und Vinylchlorid, von Styrol und Butadien oder von Vinylacetat, Vinylchlorid und Ethylen oder deren Gemische für die Herstellung von Batterien mit verbesserten

4

Lagerungs- und Entladungseigenschaften, die auf dem Katodenhalter einen elektrisch leitenden Film aufweisen.

2. Verwendung einer Dispersion nach Anspruch 1 mit einem Wassergehalt zwischen 40 und 95 Gew.%.

3. Verwendung einer Dispersion nach Anspruch 1 oder 2, wobei das Verhältnis Graphit und/oder Ruß zu Binder zwischen 4:1 und 1:2 eingestellt ist.

4. Verwendung einer Dispersion nach Ansprüchen 1 bis 3 mit einem Graphit- bzw. Rußgehalt der Trockenmasse zwischen 40 und 85%.

5. Verwendung einer Dispersion nach einem der Ansprüche 1 bis 4, wobei die Dispersion zusätzlich ein Tensid oder ein Gemisch von mehreren Tensiden in einer Menge von 0,5 bis 5 Gew.-% der Trockenmasse der Dispersion enthält.

6. Verwendung einer Dispersion nach einem der Ansprüche 1 bis 5, wobei die Dispersion ein pseudoplastisches und thixotropes Verhalten zeigt.

7. Verwendung einer Dispersion nach einem der Ansprüche 1 bis 6 mit einer Viskosität von 0,05 bis 1,2 Pa.s, gemessen bei 20°C.

8. Verwendung einer Dispersion nach einem der Ansprüche 1 bis 7, wobei das Copolymer von Styrol und Butadien durch Einbau von ungesättigten Carbonsäuren, vorzugsweise Acrylsäure, carboxyliert ist.

9. Verwendung einer Dispersion nach Anspruch 8, wobei ein carboxyliertes Styrol-Butadien-Copolymer mit einem Styrolanteil von größer als 50% verwendet wird.

## Claims

1. The use of a cathode coating dispersion containing graphite and/or black in the form of a homogeneous, aqueous dispersion for the treatment of cathode surfaces, comprising a synthetic graphite with an ash content of less than 0.1%, a grain size of less than 6 $\mu$m and a BET surface area of 12 $m^2$/g and greater, and a binding agent from the series of copolymers of vinyl acetate and ethylene, vinyl acetate and vinyl chloride, styrene and butadiene or vinyl acetate, vinyl chloride and ethylene or mixtures thereof for the production of batteries with improved storage and discharge properties which comprise an electrically conductive film on the cathode holder.

2. The use of a dispersion as claimed in Claim 1 with a water content of between 40 and 95% by weight.

3. The use of a dispersion as claimed in Claim 1 or 2, wherein the ratio of graphite and/or black to binding agent is set at between 4:1 and 1:2.

4. The use of a dispersion as claimed in Claims 1 to 3 with a graphite- and/or black content of the dry mass of between 40 and 85%.

5. The use of a dispersion as claimed in one of Claims 1 to 4, wherein the dispersion additionally contains a surfactant or a mixture of a plurality of surfactants in a quantity of 0.5 to 5 % by weight of the dry mass of the dispersion.

6. The use of a dispersion as claimed in one of Claims 1 to 5, wherein the dispersion exhibits pseudo-plastic and thixotropic characteristics.

7. The use of a dispersion as claimed in one of Claims 1 to 6 with a viscosity of 0.05 to 1.2 Pa.s, measured at 20°C.

8. The use of a dispersion as claimed in one of Claims 1 to 7, wherein the copolymer of styrene and butadiene is carboxylated by the incorporation of unsaturated carboxylic acids, preferably acrylic acid.

**9.** The use of a dispersion as claimed in Claim 8, wherein a carboxylated styrene-butadiene-copolymer with a styrene constituent greater than 50% is used.

**Revendications**

**1.** Utilisation d'une dispersion pour le revêtement de cathodes contenant du graphite et/ou du noir de carbone sous forme d'une dispersion aqueuse homogène pour le traitement de surfaces cathodiques, qui contient un graphite synthétique avec un taux de cendres inférieur à 0,1%, une granulométrie inférieure à 6 $\mu$m et une aire BET de 12 m$^2$/g et plus et un liant de la série des copolymères d'acétate de vinyle et d'éthylène, d'acétate de vinyle et de chlorure de vinyle, de styrène et de butadiène ou d'acétate de vinyle, de chlorure de vinyle et d'éthylène ou leurs mélanges pour la fabrication de batteries douées de propriétés de stockage et de décharge améliorées qui comportent une pellicule électroconductrice sur le support de cathode.

**2.** Utilisation d'une dispersion selon la revendication 1 avec une teneur en eau entre 40 et 95% en poids.

**3.** Utilisation d'une dispersion selon la revendication 1 ou 2, le rapport de graphite et/ou de noir de carbone à liant étant ajusté entre 4:1 et 1:2.

**4.** Utilisation d'une dispersion selon les revendications 1 à 3 avec une teneur en graphite ou en noir de carbone de la masse sèche comprise entre 40 et 85%.

**5.** Utilisation d'une dispersion selon l'une des revendications 1 à 4, la dispersion contenant en outre un agent de surface ou un mélange d'agents de surface en une quantité de 0,5 à 5% en poids de la masse sèche de la dispersion.

**6.** Utilisation d'une dispersion selon l'une des revendications 1 à 5, la dispersion présentant un comportement pseudoplastique et thixotrope.

**7.** Utilisation d'une dispersion selon l'une des revendications 1 à 6 ayant une viscosité de 0,05 à 1,2 Pa.s, mesurée à 20°C.

**8.** Utilisation d'une dispersion selon l'une des revendications 1 à 7, le copolymère de styrène et de butadiène étant carboxylé par incorporation d'acides carboxyliques insaturés, de préférence d'acide acrylique.

**9.** Utilisation d'une dispersion selon la revendication 8, auquel cas on utilise un copolymère styrène-butadiène carboxylé avec une fraction de styrène supérieure à 50%.